# EUROPEAN PATENT APPLICATION

(11) **EP 0 786 313 A1**
(43) Date of publication of application: **30.07.1997**
(21) Application number: 96300600.2
(22) Date of filing: 26.01.1996
(51) Int. Cl.: B25B 5/16, B23Q 3/00

(54) **Clamp component**

(71) Applicant: Flood, Colin Roger, Noble Park, Victoria 3174 (AU)
(72) Inventor: Flood, Colin Roger, Noble Park, Victoria 3174 (AU)
(74) Representative: Rackham, Anthony Charles

(57) **Abstract**

A clamp component comprising
an abutment member slidably secured to a holding member, wherein
movement of the abutment member with respect to the holding member in a first direction brings the abutment member into holding engagement with a workpiece and movement in the opposite direction removes the abutment member from holding engagement therewith.

In a further aspect the invention provides a method of holding a workpiece against sudden jerking movements in a particular direction which comprises holding the workpiece in a clamp whose jaws include a movable abutment member, said abutment member being arranged to move closer to a stop member constituting the other jaw when the workpiece is jerked in said particular direction.

## Description

This invention relates to a clamp component and relates particularly but not exclusively to a clamp which can be used in association with power tools.

Clamps of numerous different types have been used since time immemorial to hold workpieces against movement when they are shaped or machined by manual or powered tools.

Unless a workpiece is properly held by a clamp or it is so heavy that it is normally immovable, the action of the tool inevitably causes the workpiece to move during shaping or machining with the result that the accuracy of the shaping or machining operation is reduced or the operation may even not be possible without some form of holding of the workpiece.

Typically workpieces have been clamped by devices such as vices, spring loaded clamps, C-clamps etc., and generally speaking reasonable results can be achieved using such conventional clamping means. However, where power tools have been used in particular, the power tool may subject the workpiece to a sudden and violent kickback or jerking action on occasions as the workpiece is being machined.

Unless the workpiece is very securely clamped, it may be violently ejected from the clamp thereby exposing the cutting edge of the power tool with potentially dangerous consequences. Such incidents are more likely in home handyman situations because the range of clamping tools owned by the typical home handyman is less likely to be up to the task of adequately securing a workpiece than those available to a professional workman.

Thus there is a need for a clamp which can steady a workpiece against jerking kickback.

This invention provides:-
a clamp component comprising
an abutment member slidably secured to a holding member, wherein
movement of the abutment member with respect to the holding member in a first direction brings the abutment member into holding engagement with a workpiece and movement in the opposite direction removes the abutment member from holding engagement therewith.

In a further aspect the invention provides a method of holding a workpiece against sudden jerking movements in a particular direction which comprises holding the workpiece in a clamp whose jaws include a movable abutment member, said abutment member being arranged to move closer to a stop member constituting the other jaw when the workpiece is jerked in said particular direction.

In a first preferred aspect the invention provides a clamp comprising said clamp component and a stop member between which the workpiece is held.

In a second preferred aspect the sliding engagement between the holding member and the abutment member is achieved by a track and track follower mechanism provided therebetween.

In a third preferred aspect the track and track follower mechanism comprises a linear ball bearing assembly having a ball race comprised of two elongate complementary channel shaped tracks and an elongate ball bearing cage for holding ball bearings sliding within the ball race.

In a fourth preferred aspect the clamp includes coarse and fine adjustment means for setting the position of the clamp component in relation to the stop member.

In a fifth preferred aspect the coarse adjustment means comprises a base provided with a plurality of spaced holes or recesses for receiving attachment members such as bolts or pins depending from the clamp component and the fine adjustment means comprises slots or holes provided in the clamp component.

In a sixth preferred aspect the clamp includes two or more clamp components.

In a seventh preferred aspect the clamp component(s) are mounted on the base in such a fashion that movement of the abutment member(s) is in a plane parallel and/or perpendicular to the plane of the base.

In an eighth preferred aspect the base is provided with an opening or slot arranged to give a tool blade access to the workpiece.

In a ninth preferred aspect the clamp includes safety cover means to shield a tool blade.

In a tenth preferred aspect the track and follower means includes resilient means to urge the abutment member in use into engagement with the work piece.

In an eleventh preferred aspect a surface of the abutment means for contacting the workpiece in use is substantially elongate and flat.

In a twelfth preferred aspect the clamp includes a plurality of such clamp components and wherein the abutment members of the clamp components are slidably arranged to move independently in the same or parallel planes and the surface of each of the abutment members for contacting the workpiece in use is flat, curved, roughened or fitted with sharp or grasping means to engage the workpiece.

A specific embodiment in accordance with this invention will now be described with the aid of the drawings.
Figure 1 illustrates a plan view of a clamp component in accordance with this invention,
Figure 2 is on isometric view of a clamp component mounted on a base,
Figure 3 is an elevational view of a section taken through a line bisecting the clamp component of Figure 2,
Figure 4 is a plan view of an alternative clamp component/base construction,
Figure 5 is an isometric view of an alternative clamp construction,
Figure 6 is an isometric view of a clamp incorporating the clamp component of Figure 5,
Figure 7 is an isometric view of a clamp incorporating two clamp components, and
Figure 8 is an isometric view of the clamp of Figure 7 holding a workpiece.

### INTEGER LIST

1. Clamp component
2. Holding member
3. Abutment member
4. Slide
5. Spring
6. Screw
7. Screw
8. Arrow
9. Slot
21. Base
22. Angle
23. Wing nuts or other finger tightenable nuts such as tri-nuts
24. Hole
25. Opening
26. Router cutter bit
27. Opening
52. Clamp component
53. Safety cover
54. Surface
61. Stop
62. Slot
81. Workpiece
82. Arrow

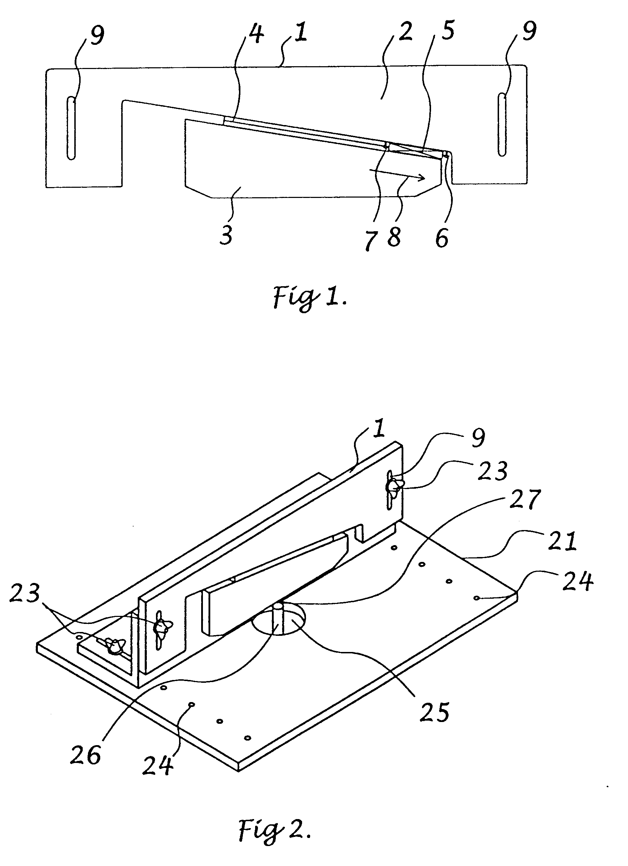

In Figure 1 the clamp component 1 consists of a holding member 2 and an abutment member 3 which are slidably engaged by means of a slide mechanism 4.

Preferably the slide mechanism is such as to ensure that there is smooth relative movement between the holding member 2 and abutment member 3 and that the relative angular orientations of these two members with respect to each other are maintained, i.e. the abutment member should preferably be secured against pivoting with respect to the holding member in instances where the abutment member is used to clamp or hold the straight side of a workpiece.

One preferred mechanism for limiting pivoting movement of abutment member 3 may comprise a ball bearing system having a ball race provided with a linear elongate cage within which a plurality of ball bearings are held. The abutment member 3 is resiliently biased by a spring 5 secured at one end by a screw 6 affixed to the holding member 2 and at the other end by a screw 7 affixed to the abutment member 3 in order to bias the abutment member 3 to move in the direction of the arrow 8.

Slots 9 are provided on either side of the holding member 2 for purposes to become apparent.

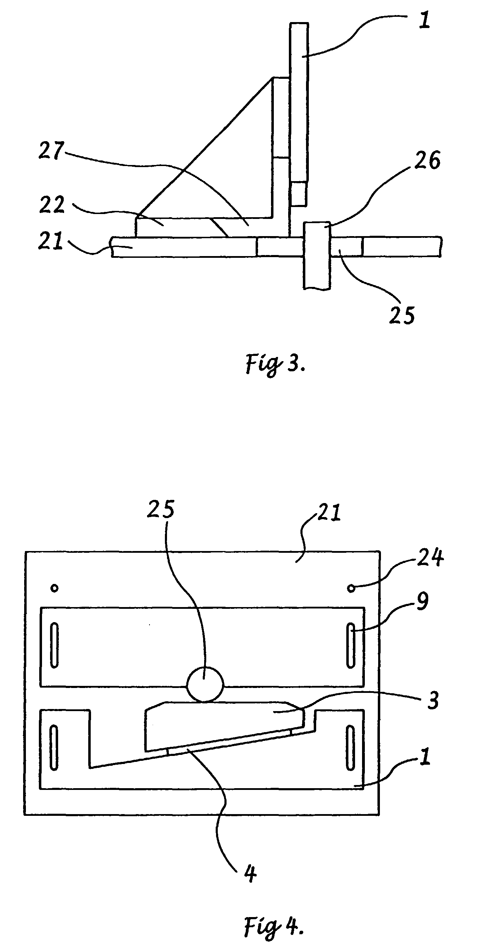

Referring to Figures 2 and 3, the clamp component 1 is mounted on the base 21 by means of an angle 22.

A series of bolts and wing nuts or other finger tightenable nut such as tri-nuts 23 adjustably secure the clamp component 1 to the angle 22 and in turn the angle 22 to the base 21 via the spaced holes 24.

The base 21 is provided with an opening 25 through which the blade of a tool such as a router cutter bit 26 or circular saw etc. may protrude. The shape of the opening 25 may depend on the type of tool used i.e. in the case of a circular saw, an elongate opening would be provided.

Additionally a corresponding opening 27 is provided in the angle 22 to provide clearance for the router cutter bit 26.

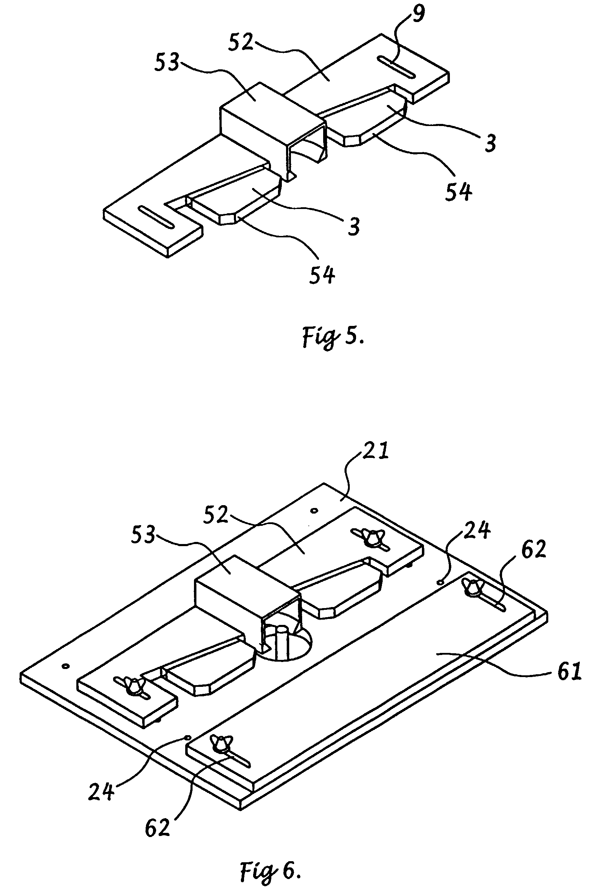

In Figure 4 the clamp component is mounted in such a manner that the movement of the abutment member 3 is parallel to the plane of the base 21 rather than perpendicular as it is shown in Figure 2.

Referring to Figure 5, the clamp component 52 is provided with two slidable abutment members 3 and a safety cover 53.

Whilst the drawing illustrates abutment members having an elongate flat surface 54 for engaging a workpiece, the fact that there are two such abutment members in line, means that it is no longer necessary for the surface 54 to be flat.

Thus it may be curved, or it may include means to assist gripping of the workpiece such as teeth or sharp points or abrasives or any other suitable means for assisting gripping. It is also noted that a clamp component incorporating two or more abutment members is capable of holding irregularly shaped workpieces.

In Figure 6, the clamp component shown in Figure 5 is mounted on a base opposite an adjustable stop 61. This stop 61 forms the second jaw of the clamp defined by the clamp component 52 and the stop 61.

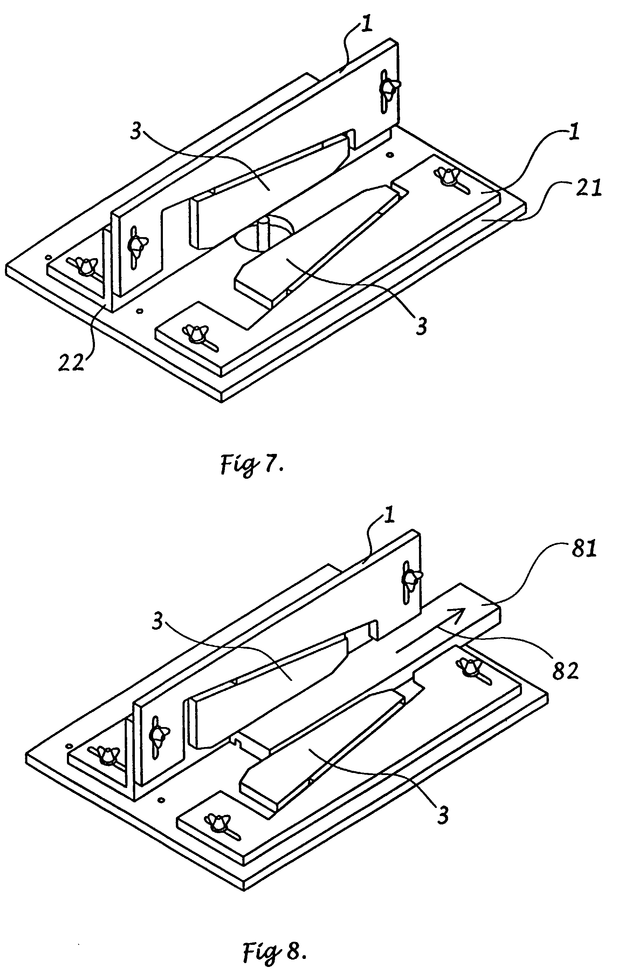

In Figures 7 and 8 a clamp arrangement including two clamp components 1 acts to hold the workpiece 81 in two directions. The upstanding clamp component works against base 21 whereas the horizontal clamp component works against angle 22.

In use, the clamp component should be arranged in order that the natural kicking or jerking action of a tool serves to push the workpiece 81 in the direction of arrow 82.

When this occurs, friction between the abutment member 3 and the workpiece 81 make the abutment members 3 move in the same direction as the movement of the arrow 82. This has the effect of tightening the engagement between the abutment members and the workpiece thereby reducing the likelihood that the workpiece will be violently ejected from the clamp.

The claims, illustrations, photographs and drawings, if any, form part of the disclosure of this specification as does the description, claims, illustrations, photographs and drawings of any associated provisional or parent specification or of any priority document, if any, all of which are imported hereinto as part of the record hereof.

Finally it is to be understood that various alterations, modifications and/or additions may be incorporated into the various constructions and arrangements or parts without departing from the spirit and ambit of the invention.

## Claims

1. A clamp component comprising
an abutment member slidably secured to a holding member, wherein
movement of the abutment member with respect to the holding member in a first direction brings the abutment member into holding engagement with a workpiece and movement in the opposite direction removes the abutment member from holding engagement therewith.

2. A clamp component as claimed in Claim 1, wherein said first direction and said second direction are linear directions.

3. A clamp comprising the clamp component of Claim 1 or Claim 2, and a stop member located with respect to the clamp component such that in use a workpiece can be held in between and by the clamp component and the stop member.

4. A clamp as claimed in Claim 3, wherein the sliding engagement between the holding member and the abutment member is achieved by a track and track follower mechanism provided therebetween.

5. A clamp as claimed in Claim 4, wherein the track and track follower mechanism comprises a linear ball bearing assembly having a ball race comprised of two elongate complementary channel shaped tracks and an elongate ball bearing cage for holding ball bearings sliding within the ball race.

6. A clamp as claimed in any one of claims 3 - 5, wherein the clamp includes coarse and fine adjustment means for setting the position of the clamp component in relation to the stop member.

7. A clamp as claimed in Claim 6, wherein the coarse adjustment means comprises a base provided with a plurality of spaced holes or recesses for receiving attachment members such as bolts or pins depending from the clamp component and the fine adjustment means comprises slots or holes provided in the clamp component.

8. A clamp as claimed in Claim 7, wherein the clamp component is mounted on the base such that movement of the abutment member is in a plane substantially parallel and/or substantially perpendicular to the plane of the base.

9. A clamp as claimed in Claim 7 or Claim 8, wherein the base is provided with an opening or slot arranged to give a tool blade access to the workpiece.

10. A clamp as claimed in any one of Claims 3 - 9, and further including safety cover means to shield a tool blade.
